# EUROPÄISCHE PATENTANMELDUNG

(11) **EP 3 782 966 A1**
(43) Veröffentlichungstag der Anmeldung: **24.02.2021**
(21) Anmeldenummer: 20200483.4
(22) Anmeldetag: 17.02.2012
(51) Int. Cl.: C03C 29/00, C03C 3/19, C03C 4/20, C03C 8/24, H01B 17/30, B23K 101/36, B23K 103/10, H01M 10/0525, H01M 50/172, H01M 50/186, H01M 50/191, H01M 50/543

(54) **DURCHFÜHRUNG**

(30) Priorität: 18.02.2011 DE 102011011705; 25.02.2011 DE 102011012430; 01.04.2011 DE 102011015869; 10.06.2011 DE 102011103975; 10.06.2011 DE 102011103976; 07.07.2011 DE 102011106873
(62) Teilanmeldung aus: 12706772.6
(71) Anmelder: Schott AG, 55122 Mainz (DE)
(72) Erfinder: KROLL, Frank, 84036 Landshut (DE); HARTL, Helmut, 3400 Klosterneuburg (AT); ROTERS, Andreas, 55118 Mainz (DE); ESEMANN, Hauke, 55232 Alzey (DE); GÖDEKE, Dieter, 35043 Marburg (DE); DAHLMANN, Ulf, 84034 Landshut (DE); PICHLER-WILHELM, Sabine, 84036 Landshut (DE); LANDENDINGER, Martin, 84056 Rottenburg (DE); BARTELT, Linda Johanna, 84028 Landshut (DE)
(74) Vertreter: Sawodny, Michael-Wolfgang

(57) **Zusammenfassung**

Die Erfindung betrifft ein Gehäuseteil eines Gehäuses, insbesondere eines Batteriegehäuses, aus einem Metall, wobei der Gehäuseteil wenigstens eine Öffnung aufweist, in die eine Durchführung eingebracht ist, wobei die Durchführung ein Glas- oder Glaskeramikmaterial sowie wenigstens einen Leiter, insbesondere einen im Wesentlichen stiftförmigen Leiter, der in das Glas- oder Glaskeramikmaterial eingebracht ist umfasst und einen Grundkörper, durch den der Leiter in dem Glas- oder Glaskeramikmaterial hindurchgeführt wird. Die Erfindung ist dadurch gekennzeichnet, dass der Grundkörper in der Öffnung hermetisch dicht mit dem Gehäuseteil durch Schweißen, Löten, Einpressen, Einbördeln oder Einschrumpfen verbunden ist, derart, dass eine Helium-Leckrate geringer als 1•10⁻⁸ mbar l/sec ist.

## Beschreibung

Die Erfindung betrifft eine Durchführung, insbesondere durch ein Gehäuseteil eines Gehäuses, insbesondere eines Batteriezellengehäuses, wobei das Gehäuseteil wenigstens eine Öffnung aufweist, durch die wenigstens ein im Wesentlichen stiftförmiger Leiter in einem Glas- oder Glaskeramikmaterial hindurchgeführt wird.

Als Batterien im Sinne der Erfindung wird sowohl eine Einwegbatterie, die nach ihrer Entladung entsorgt und/oder recycelt wird, als auch ein Akkumulator verstanden.

Akkumulatoren, bevorzugt Lithium-Ionen-Batterien, sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydridbatterien ersetzen.

Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.

Verschiedene Aspekte von Lithium-Ionen-Batterien sind in einer Vielzahl von Patenten beschrieben. Beispielsweise seien genannt US 961,672, US 5,952,126, US 5,900,183, US 5,874,185, US 5,849,434, US 5,853,914 sowie US 5,773,959.

Lithium-Ionen-Batterien, insbesondere für Anwendungen in einer Automobil-Umgebung weisen in der Regel eine Vielzahl von einzelnen Batteriezellen auf, die miteinander in Serie geschaltet werden. Die miteinander in Reihe bzw. in Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden.

Insbesondere für die Anwendung von Lithium-Ionen-Batterien in der Automobil-Umgebung müssen eine Vielzahl von Problemen wie Korrosionsbeständigkeit, Beständigkeit bei Unfall oder Schwingungsfestigkeit gelöst werden. Ein weiteres Problem ist die hermetische Dichtheit der Batteriezellen über einen langen Zeitraum. Die Dichtheit beeinträchtigen können z. B. Undichtigkeit im Bereich der Elektroden der Batteriezelle beziehungsweise der Elektrodendurchführung der Batteriezelle. Derartige Undichtigkeiten können beispielsweise hervorgerufen werden durch Temperaturwechselbelastungen und mechanische Wechselbelastungen, wie beispielsweise Vibrationen im Fahrzeug oder die Alterung des Kunststoffes. Ein Kurzschluss oder Temperaturänderungen der Batterie beziehungsweise Batteriezelle kann zu einer verminderten Lebensdauer der Batterie beziehungsweise Batteriezelle führen.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss beziehungsweise die Elektroden sind durch einen Kunststoff isoliert. Nachteilig an den Kunststoffisolierungen sind die limitierte Temperaturbeständigkeit, die begrenzte mechanische Beständigkeit, die Alterung und die unsichere Dichtheit über der Lebensdauer. Die Stromdurchführungen sind bei den Lithium-Ionen-Batterien gemäß dem Stand der Technik somit nicht hermetisch dicht in beispielsweise das Deckelteil der Li-Ionen-Batterie eingebaut. Des Weiteren sind die Elektroden verquetschte und lasergeschweißte Verbindungsbauteile mit zusätzlichen Isolatoren im Innenraum der Batterie.

Ein weiteres Problem bei den Lithium-Ionen-Batterien im Stand der Technik war, dass die Batteriezellen einen großen Bauraum aufwiesen und aufgrund der hohen Ströme durch Widerstandsverluste sehr rasch Erwärmung und damit Temperaturänderungen auftraten.

Aus der DE 27 33 948 A1 ist eine Alkalibatterie bekanntgeworden, bei der ein Isolator wie z. B. Glas oder Keramik unmittelbar durch eine Schmelzverbindung mit einem Metallteil verbunden ist.

Eines der Metallteile ist elektrisch mit einer Anode der Alkalibatterie und das andere elektrisch mit einer Kathode der Alkalibatterie verbunden. Bei den in der DE 27 33 948 A1 verwandten Metallen handelt es sich um Eisen oder Stahl. Leichtmetalle wie Aluminium sind in der DE 27 33 948 A1 nicht beschrieben. Auch die Verschmelztemperatur des Glas- oder Keramikmaterials ist in der DE 27 33 948 A1 nicht angegeben. Bei der in der DE 27 33 948 A1 beschriebenen Alkalibatterie handelt es sich um eine Batterie mit einem alkalischen Elektrolyten, der gemäß der DE 27 33 948 A1 Natriumhydroxid oder Kaliumhydroxid enthält. Eine Erwähnung von Li-Ionen-Batterie findet sich in der DE 27 33 948 A1 nicht.

Aus der DE 698 04 378 T2 bzw. der EP 0 885 874 B1 ist ein Verfahren zur Herstellung von asymmetrischen organischen Carbonsäureestern und zur Herstellung von wasserfreien organischen Elektrolyten für Alkali-Ionen-Batterien bekanntgeworden. Auch Elektrolyte für wiederaufladbare Lithium-Ionenzellen sind in der DE 698 04 378 T2 bzw. EP 0 885 874 B1 beschrieben.

Materialien für den Zellsockel, der die Durchkontaktierung aufnimmt, sind nicht beschrieben, lediglich Materialien für den Anschlussstift, der aus Titan, Aluminium, einer Nickellegierung oder rostfreiem Stahl bestehen kann.

Die DE 699 23 805 T2 bzw. EP 0 954 045 B1 beschriebt eine RF-Durchführung mit verbesserter elektrischer Wirksamkeit. Bei den aus der EP 0 954 045 B1 bekannten Durchführungen handelt es sich nicht um eine Glas-Metall-Durchführung. In der EP 0 954 045 B1 werden Glas-Metall-Durchführungen, die unmittelbar innerhalb beispielsweise der Metallwand einer Verpackung ausgebildet werden als nachteilig beschrieben, da derartige RF-Durchführungen auf Grund der Versprödung des Glases nicht dauerhaft sind.

Die DE 690 230 71 T2 bzw. EP 0 412 655 B1 beschreibt eine Glas-Metall-Durchführung für Batterien oder andere elektrochemische Zellen, wobei als Gläser mit einem SiO₂-Gehalt von ungefähr 45 Gew.-% verwandt werden und als Metalle, insbesondere Legierungen verwandt werden, die Molybdän und/oder Chrom und/oder Nickel umfassen. Die Verwendung von Leichtmetallen ist in der DE 690 23 071 T2 ebenso wenig beschrieben wie Verschmelztemperaturen bzw. Verschmelzungstemperaturen für die verwandten Gläser. Auch die Materialien für die stiftförmigen Leiter sind gemäß DE 690230 71 T2 bzw. EP 0 412 655 B1 Legierungen, die Molybdän, Niob oder Tantal umfassen.

Aus der US 7,687,200 ist eine Glas-Metall-Durchführung für Lithium-Ionen-Batterien bekannt geworden. Gemäß der US 7,687,200 war das Gehäuse aus Edelstahl und der stiftförmige Leiter aus Platin/Iridium. Als Glasmaterialien sind in der US 7,687,200 die Gläser TA23 und CABAL-12 angegeben. Gemäß der US 5,015,530 handelt es sich dabei um CaO-MgO-Al₂O₃-B₂O₃-Systeme mit Verschmelztemperaturen von 1025° C bzw. 800° C. Des Weiteren sind aus der US 5,015,530 Glaszusammensetzungen für Glas-Metall-Durchführungen für Lithium-Batterien bekannt geworden, die CaO, Al₂O₃, B₂O₃, SrO und BaO umfassen, deren Verschmelztemperaturen im Bereich 650° C - 750° C liegen und damit zu hoch sind für eine Verwendung zusammen mit Leichtmetallen

Aus der US 4,841,101 ist eine Durchführung bekanntgeworden, bei der ein im wesentlicher stiftförmiger Leiter mit einem Glasmaterial in einen Metallring eingeglast wird. Der Metallring wird dann wiederum in eine Öffnung beziehungsweise Bohrung eines Gehäuses eingesetzt und durch Löten beispielsweise nach Einspringen eines Lötringes, mit der Innenwand beziehungsweise Bohrung verbunden, insbesondere stoffschlüssig. Der Metallring besteht aus einem Metall, das im Wesentlichen denselben beziehungsweise einen ähnlichen thermischen Ausdehnungskoeffizient aufweist wie das Glasmaterial um den hohen thermischen Ausdehnungskoeffizienten des Aluminiums des Batteriegehäuses zu kompensieren. Bei der in der US 4,841,101 beschriebenen Ausführungsform ist die Länge des Metallringes stets kürzer als die Bohrung beziehungsweise Öffnung im Gehäuse. Angaben zu den Glaszusammensetzungen sind in der US 4,841,101 nicht gemacht, auch eine spezielle Verwendung der Durchführung beispielsweise für Batterien, insbesondere Li-Ionen-Akkumulatoren ist nicht beschrieben.

Aufgabe der Erfindung ist es somit, eine Durchführung anzugeben, die die Probleme des Standes der Technik vermeidet.

Erfindungsgemäß wird dies dadurch gelöst, dass bei Durchführungen, insbesondere durch eine Öffnung in einem Gehäuseteil eines Gehäuses, insbesondere für eine Batteriezelle, bevorzugt aus einem niedrig schmelzenden Leichtmetall, bevorzugt Aluminium, eine Aluminiumlegierung, Magnesium, eine Magnesiumlegierung, Titan, einer Titanlegierung oder aus einem Metall, insbesondere Stahl, Edelstahl, insbesondere Nirosta-Stahl oder AlSiC, ein Leiter, insbesondere ein im Wesentlichen stiftförmiger Leiter in einem Glas- oder Glaskeramikmaterial hindurchgeführt wird.

Die Erfindung ist dadurch gekennzeichnet, dass die Durchführung wenigstens ein Leiter, insbesondere ein im Wesentlichen stiftförmigen Leiter sowie einen Grundkörper, insbesondere einen im Wesentlichen ringförmigen Grundkörper umfasst. Bei der Ausgestaltung der Durchführung durch das Gehäuseteil mittels eines zusätzlichen Grundkörpers, in dem der Leiter, insbesondere in dem das stiftförmige Leitermaterial eingeglast wird, ist es möglich, die Durchführung vorzufertigen, d.h. das Stiftmaterial in den Grundkörper einzuglasen und anschließend in das Gehäuseteil, insbesondere in eine Batteriezelle, einzubauen. Der Grundkörper kann dann auf die jeweilige Herstelltechnologie und Form der Durchführung sowie der Herstelltechnologie und Form des Gehäuseteils optimiert getroffen werden. Insbesondere können durch die Vorfertigung wesentlich kleinere Heizeinrichtungen als bei einer Einglasung direkt in das Gehäuseteil verwendet werden, da nicht das gesamte Gehäuseteil, z. B. in einem Ofen erwärmt werden muss, sondern lediglich der Grundkörper mit wesentlich geringeren Abmessungen. Des Weiteren ermöglicht eine derartige Ausgestaltung, bei der eine Vorfertigung der Durchführung aus einem Grundkörper und einem Leiter, insbesondere einem im Wesentlichen stiftförmigen Leiter möglich ist, ein kostengünstiges Einbringen der Durchführung in die Öffnung des Gehäuseteils, beispielsweise in einem einstufigen Prozess, beispielsweise unter Ausnutzung der Kaltverfestigungsmöglichkeiten des Gehäuseteils. Konkret bedeutet dies, dass zunächst in das Gehäuseteil, beispielsweise in den Deckel die Öffnung, z. B. durch Stanzen, eingebracht wird. Das Gehäuse ist kaltverfestigt, da es nicht erhitzt wird. Im Gegensatz hierzu ist der Grundkörper weich, da er beim Einglasen des stiftförmigen Leiters mit einem Glas- oder Glaskeramikmaterial erhitzt wird. Auf diese Art und Weise ist es möglich, ein strukturfestes Batteriezellengehäuse, insbesondere im Bereich der Durchführungen herstellen zu können, da im Gegensatz beispielsweise zu einer Direkteinglasung in ein Gehäuseteil kein Verlust der Kaltverfestigung des Gehäuseteils, insbesondere Deckteils auftritt. Ein weiterer Vorteil ist, dass die Materialstärke des Gehäuseteils gegenüber dem Grundkörper, in den die Einglasung erfolgt deutlich geringer gewählt werden kann. Beispielsweise kann die Materialstärke des Gehäuseteils 1,5 mm und weniger betragen, wohingegen der Grundkörper aus Festigkeitsgründen eine Dicke von 2,0 mm, insbesondere 3,0 mm und mehr umfasst. Die Materialstärke des Gehäuses beziehungsweise Gehäuseteils liegt bevorzugt zwischen 1 mm und 3 mm, bevorzugt zwischen 1,5 mm und 3 mm. Die Dicke des Grundkörpers zwischen 2 mm und 6 mm, bevorzugt 2,5 mm und 5 mm. Die Dicke des Grundkörpers wird dabei immer angepasst an die Materialstärke des Gehäuses beziehungsweise Gehäuseteils, insbesondere des Batteriedeckels gewählt, in den die Durchführung eingesetzt wird. Bei einer Direkteinglasung wären hingegen unnötig große Materialstärken erforderlich.

Ein weiterer Vorteil ist, dass die Materialien für Grundkörper und Gehäuseteil unterschiedlich gewählt werden können, insbesondere in Bezug auf die Materialqualität und die Wahl der Legierung. Die Durchführung kann mit dem Grundkörper im Gehäuseteil hermetisch dicht durch Schweißen, Löten, Einpressen, Einbördeln oder Einschrumpfen verbunden werden. Beim Verbinden der Durchführung mit dem Gehäusebauteil, z. B. durch Schweißen wird darauf geachtet, dass der Temperatureintrag so niedrig wie möglich ist, um eine Beschädigung des Glas- oder Glaskeramikmaterials zu vermeiden. Hermetisch dicht bedeutet in dieser Anmeldung, dass die Helium-Leckrate geringer als 1 · 10⁻⁸ mbar l/sec.ist. Gegenüber dem Stand der Technik, bei dem in einem mehrstufigen Prozess eine Kunststoffdichtung für die Durchführung zur Verfügung gestellt werden musste, ist eine hermetisch dichte Verbindung des erfindungsgemäßen Durchführungsbauteils mit dem Gehäuseteil in einem einzigen einfachen Verfahrensschritt herstellbar.

Des Weiteren kann die Auswahl des Grundkörpers auch mit Blick auf das Material des Gehäuseteils erfolgen, sowohl was die Randausführung als auch was die Materialhärte betrifft und insbesondere auch die Methode zum Verschließen des Gehäuses. Besteht das Gehäuse der Batteriezelle beispielsweise aus Aluminium, so kann als Material für den Grundkörper ebenfalls Aluminium gewählt werden.

Des Weiteren ist es möglich, zusätzlich zu den Durchführungen im Gehäuseteil des Gehäuses der Batteriezelle auch noch andere Funktionen einzubringen, beispielsweise ein Sicherheitsventil und/oder eine Batteriefüllöffnung.

Besonders bevorzugt ist es, wenn in einer ersten Ausgestaltung der Erfindung das Gehäuseteil und/oder der Grundkörper, bevorzugt der im Wesentlichen ringförmige Grundkörper, als Material ein Metall, insbesondere ein Leichtmetall, wie Titan, eine Titanlegierung, Magnesium, eine Magnesiumlegierung, eine Aluminiumlegierung, Aluminium, AlSiC, aber auch Stahl, rostfreier Stahl oder Edelstahl umfasst. Als Titanlegierungen können z. B. Ti6246 und/oder Ti6242 verwandt werden. Titan ist ein körperverträgliches Material, so dass es für medizinische Anwendungen, beispielsweise in der Prothetik, zum Einsatz kommt. Ebenso wird es wegen der besonderen Festigkeit, Beständigkeit und geringem Gewicht in besonderen Anwendungen gerne verwendet, beispielsweise im Rennsport, aber auch für Luft- und Raumfahrtanwendungen.

Für den Grundkörper und/oder das Gehäuseteil können auch hochlegierte Werkzeugstähle, die für eine spätere Wärmebehandlung vorgesehen sind, verwendet werden. Verwendbar als

Edelstähle sind beispielsweise X12CrMoS17, X5CrNi1810, XCrNiS189, X2CrNi1911, X12CrNi177, X5CrNiMo17-12-2, X6CrNiMoTi17-12-2, X6CrNiTi1810 und X15CrNiSi25-20, X10CrNi1808, X2CrNiMo17-12-2, X6CrNiMoTi17-12-2. Um eine besonders gute Verschweißbarkeit sowohl beim Laserschweißen wie auch beim Widerstandsschweißen zur Verfügung stellen zu können, als Material für den Grundkörper und/oder das Gehäuseteil, insbesondere das Batteriezellengehäuse, ganz besonders Edelstähle, insbesondere Cr-Ni-Stähle mit den Werkstoff-Nummern (WNr.) gemäß Euro-Norm (EN) 1.4301, 1.4302, 1.4303, 1.4304, 1.4305, 1.4306, 1.4307 verwandt. Als Normalstahl kann St35, St37 oder St38 verwandt werden.

Für den stiftförmigen Leiter wird insbesondere Kupfer (Cu) oder eine Kupferlegierung verwandt, wenn der stiftförmige Leiter an eine Kathode der elektrochemischen Zelle bzw. Batteriezelle angeschlossen wird und Aluminium (Al) oder eine Aluminiumlegierung, wenn der Leiter, insbesondere der stiftförmige Leiter, an eine Anode angeschlossen wird. Andere Materialien für den stiftförmigen Leiter können Magnesium, eine Magnesiumlegierung, eine Kupferlegierung, CuSiC, AlSiC, NiFe, eine Kupferseele, d. h. ein NiFe-Mantel mit Kupferinnenteil Silber, eine Silberlegierung, Gold, eine Goldlegierung sowie eine Kobalt-Eisen-Legierung sein.

Als Aluminium oder Aluminiumlegierungen, insbesondere für den Leiter, kommen in Frage:
EN AW-1050 A
EN AW-1350
EN AW-2014
EN AW-3003
EN AW-4032
EN AW-5019
EN AW-5056
EN AW 5083
EN AW-5556A
EN AW-6060
EN AW-6061.

Als Kupfer, insbesondere für den Leiter, kommen in Frage:
Cu-PHC 2.0070
Cu-OF 2.0070
Cu-ETP 2.0065
Cu-HCP 2.0070
Cu-DHP 2.0090.

In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise den stiftförmigen Leiter oder das Elektrodenverbindungsbauteil verwandt, so zeichnen sich die Leichtmetalle des Weiteren noch durch eine spezifische elektrische Leitfähigkeit im Bereich 5 · 10⁶S/m bis 50 · 10⁶S/m aus. Bei Einsatz in Druckglasdurchführungen liegt zudem noch der Ausdehnungskoeffizient α für den Bereich 20° C bis 300° C im Bereich 18 · 10⁻⁶/K bis 30 · 10⁻⁶/K.

Im Allgemeinen haben Leichtmetalle Schmelztemperaturen im Bereich 350° C bis 800° C.

Bevorzugt ist der Grundkörper als ringförmiger Grundkörper ausgebildet, bevorzugt in kreisrunder Form, aber auch in ovaler Form. Die ovale Form ist insbesondere dann bevorzugt, wenn das Gehäuseteil, insbesondere das Deckelteil der Batteriezelle, in deren Öffnung(en) die Durchführung eingebracht ist, eine schmale längliche Form aufweist und das Glas- bzw. Glaskeramikmaterial, mit dem der stiftförmige Leiter durch das Gehäuseteil in der Öffnung hindurchgeführt wird, vollständig zwischen dem Grundkörper und dem stiftförmigen Leiter eingebracht ist. Eine derartige Ausgestaltung erlaubt es, die Durchführung, bestehend aus einem im Wesentlichen stiftförmigen Leiter und einem im Wesentlichen ringförmigen Grundkörper vorzufertigen.

Bevorzugt werden in einer Ausgestaltung als Glas- oder Glaskeramikmaterial derartige Materialien ausgewählt, die eine Verschmelztemperatur aufweisen, die geringer ist als die Schmelztemperatur des Grundkörpers und/oder des im Wesentlichen stiftförmigen Leiters. Besonders bevorzugt sind hier Glas- oder Glaskeramikzusammensetzungen mit niedrigen Verschmelztemperaturen, bevorzugt Zusammensetzungen, umfassend die nachfolgenden Komponenten:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

Insbesondere bevorzugt ist die Zusammensetzung umfassend die nachfolgenden Komponenten:

| | |
|---|---|
| P₂O₅ | 38-50 mol.-%, insbesondere 39-48 mol.-% |
| Al₂O₃ | 3-14 mol.-%, insbesondere 2-12 mol.-% |
| B₂O₃ | 4-10 mol.-%, insbesondere 4-8 mol.-% |
| Na₂O | 10-30 mol.-%, insbesondere 0-20 mol.-% |
| K₂O | 10-20 mol.-%, insbesondere 12-19 mol.-% |
| PbO | 0-10 mol.-%., insbesondere 0-9 mol.-% |

Die vorher angegebenen Glaszusammensetzungen zeichnen sich nicht nur durch eine niedrige Verschmelztemperatur und ein niedriges Tg aus, sondern auch dadurch, dass sie gegenüber Batterie-Elektrolyten eine ausreichend hohe Beständigkeit aufweisen und insoweit die geforderte Langzeitbeständigkeit gewährleisten.

Bei den als bevorzugt angegebenen Glasmaterialien handelt es sich um stabile Phosphatgläser, die einen deutlich niedrigeren Gesamtalkaligehalt als bekannte Alkali-Phosphat-Gläser aufweisen.

Durch die in der Regel hohe Kristallisationsstabilität der Phosphatgläser wird sichergestellt, dass das Aufschmelzen der Gläser auch bei Temperaturen in der Regel < 600° C nicht behindert wird. Dies ermöglicht es, dass die angegebenen Glaszusammensetzungen als Glaslot verwendet werden können, da das Aufschmelzen der Glaszusammensetzungen auch bei Temperaturen in der Regel < 600° C nicht behindert wird.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bzw. natriumfreie Gläser besonders beständig gegenüber Elektrolyten, insbesondere solchen, wie sie in Li-Ionen-Speichereinrichtungen verwandt werden, sind.

Des Weiteren zeigen derartige Glaszusammensetzungen eine thermische Ausdehnung α im Bereich 20° C bis 300° C > 14 · 10⁻⁶/K, insbesondere zwischen 15 · 10⁻⁶/K und 25 · 10⁻⁶/K. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für Al-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Die Verschmelztemperatur kann beispielsweise über die Halbkugeltemperatur wie in R. Görke, K.-J. Leers: Keram. Z. 48 (1996) 300-305, bzw. nach DIN 51730, ISO 540 oder CEN/TS 15404 und 15370-1 beschrieben, deren Offenbarungsgehalt vollumfänglich in vorliegende Anmeldung mit aufgenommen wird, bestimmt werden. Die Messung der Halbkugeltemperatur ist ausführlich in der DE 10 2009 011 182 A1, deren Offenbarungsgehalt vollumfänglich in vorliegende Anmeldung mit aufgenommen wird, beschrieben. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas beispielsweise in Form eines Glaspulvers aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der so genannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ±20 K von der Halbkugeltemperatur abweichen.

Besonders bevorzugt ist es, wenn das Gehäuseteil des Batteriegehäuses beziehungsweise Batteriezellengehäuses eine Außen- und Innenseite aufweist und der Grundkörper der Durchführung mit der Innen- oder Außenseite des Gehäuseteils verbunden wird, insbesondere beispielsweise durch Bördeln, Schweißen, Einpressen, Löten oder Einschrumpfen.

Hierzu ist es besonders bevorzugt, wenn der Grundkörper einen Überstand aufweist, so dass ein Teil des Grundkörpers in die Öffnung des Gehäuseteils eingreift, ein anderer Teil des Grundkörpers über die Öffnung hinausragt und auf der Innen- oder Außenseite des Gehäuseteils aufliegt bzw. dort mit dem Gehäuseteil verbunden werden kann.

In einer fortgebildeten Ausführungsform umfasst auch der stiftförmige Leiter ein Kopfteil beziehungsweise Befestigungsteil. Das Kopfteil kann einen über das Kopfteil hinaustragenden Fortsatz aufweisen. Der Fortsatz kann dazu dienen, eine Zentrierung für Elektroden bzw. Elektroden-Verbindungsteile Verfügung zu stellen. Bei der Ausführungsform mit Kopfteil können an das Kopfteil, das sich in das Innere des Batteriezellengehäuses erstreckt, Elektroden-Verbindungsteilen beziehungsweise die Batterieelektroden angeschlossen werden.

Der Fortsatz kann eine andere Außenkontur aufweisen als der stiftförmige Leiter. So wäre es möglich, dass der stiftförmige Leiter eine ovale Außenkontur aufweist, der Fortsatz hingegen eine ringförmige Außenkontur. Auch die Abmessungen müssen nicht notwendig gleich sein.

Neben der Durchführung stellt die Erfindung auch ein Gehäuse, insbesondere für eine elektrische Speichereinrichtung, insbesondere eine Batteriezelle zur Verfügung. Das Gehäuse umfasst wenigstens ein Gehäuseteil mit wenigstens einer Öffnung und ist dadurch gekennzeichnet, dass die Öffnung des Gehäuseteils eine erfindungsgemäße Durchführung mit wenigstens einem stiftförmigen Leiter, der in einen Grundkörper eingeglast ist, aufnimmt.

Ganz bevorzugt handelt es sich bei der Batteriezelle, für die das Gehäuse zur Verfügung gestellt wird, um eine Batteriezelle für eine Lithium-Ionen-Batterie.

Des Weiteren stellt die Erfindung ein Verfahren zum Herstellen einer Durchführung mit wenigstens einem im Wesentlichen stiftförmigen Leiter zur Verfügung, wobei das Verfahren die folgenden Schritte umfasst:
- es wird ein Leiter, insbesondere ein im wesentlichen stiftförmiger Leiter und ein Grundkörper zur Verfügung gestellt
- der Leiter, insbesondere der im Wesentlichen stiftförmige Leiter wird in einem Glas- oder Glaskeramikmaterial in einem Grundkörper eingeglast ergebend die Durchführung für ein Gehäuseteil eines Gehäuses, insbesondere eines Batteriezellengehäuses.

Daneben wird eine Verfahren zum Einbringen einer Durchführung mit einem Grundkörper in ein Gehäusebauteil gezeigt, dass sich dadurch auszeichnet, dass die Durchführung mit Grundkörper und darin eingeglastem Leiter, insbesondere stiftförmigen Leiter, insbesondere durch Schweißen, bevorzugt Laserstrahlschweißen, Elektronenstrahlschweißen, Ultraschallschweißen, Widerstandsschweißen sowie alternativ durch Löten, Einschrumpfen, Einpressen oder Einbördeln verbunden wird.

Die Erfindung soll nachfolgend anhand der Ausführungsbeispiele und der Zeichnungen ohne Beschränkung hierauf näher beschrieben werden.

Es zeigen:
- Fig. 1a-1b: eine erste Ausgestaltung einer erfindungsgemäßen Durchführung mit einem Metallstift und einem Grundkörper in einem Gehäuseteil, wobei der Grundkörper als Flanschring ausgebildet ist;
- Fig. 2a-2b: eine zweite Ausgestaltung einer erfindungsgemäßen Durchführung mit einem Grundkörper, der als Schweißring ausgebildet ist;
- Fig. 3: eine dritte Ausführungsform einer erfindungsgemäßen Durchführung, bei der der Grundkörper durch Laserschweißen, Löten, Einschrumpfen oder Elektronenschweißen im Bereich der Öffnung mit dem Gehäuseteil verbunden wird;
- Fig. 4a-4c: eine vierte Ausführungsform der erfindungsgemäßen Durchführung mit einem konischen Ring als Grundkörper, der in eine Öffnung des Gehäuseteils eingesetzt wird;
- Fig. 5a-5c: eine Ausgestaltung einer erfindungsgemäßen Durchführung mit einem ovalen stiftförmigen Leiter mit einem ovalen Kopfteil;
- Fig. 6a-6b: eine weitere Ausführungsform eines kreisrunden stiftförmigen Leiters mit einem kreisrunden Kopfteil;
- Fig. 7a-7b: eine vierte Ausführungsform eines stiftförmigen Leiters mit einem Kopfteil.
- Fig. 8a - 8b: erste Ausführungsform einer Durchführung mit therimscher Barriere mechanischer Entlastung.
- Fig. 9a - 9b: zweite Ausführungsform eines Durchführung mit thermischer Barriere und mechanischer Entlastung.
- Fig. 10a-10b: Batteriezelle mit einem Batteriezellengehäuse und einer Durchführung mit Durchführungsbauteil ohne Kopfteil mit Elektroden-Verbindungsbauteil.
- Fig. 11a-11b: Batteriezelle mit einem Batteriezellengehäuse und einer Durchführung mit Durchführungsbauteil mit Kopfteil gemäß der Erfindung mit Elektroden-Verbindungsbauteil.
- Fig. 12a-12c: Batteriezelle mit einem Batteriezellengehäuse und einer Durchführung mit Durchführungsbauteil gemäß einer weiteren Variante der Erfindung.

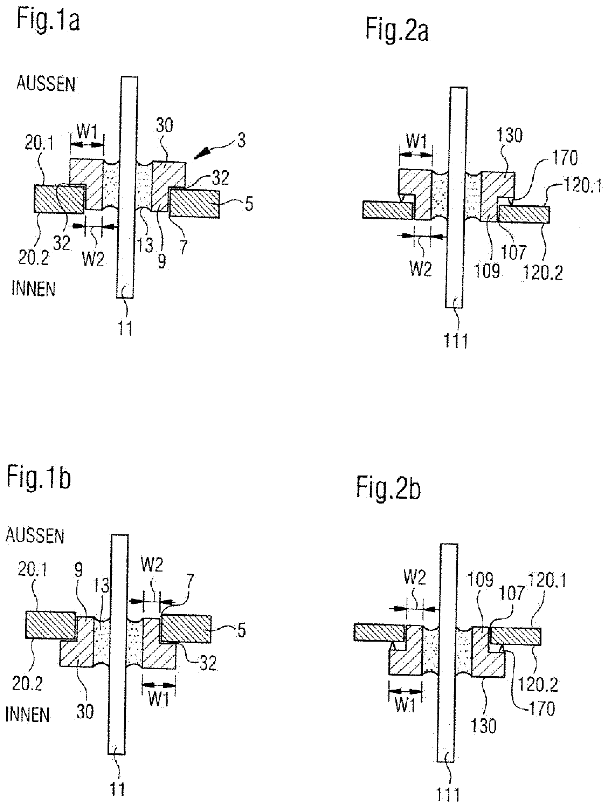

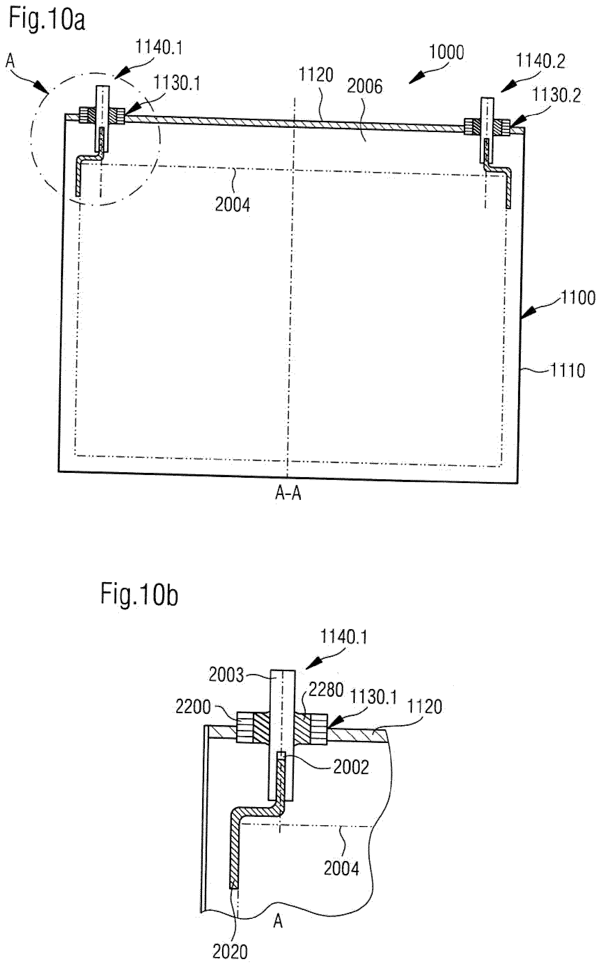

In Fig. 1a ist eine erfindungsgemäße Durchführung 3 durch ein Gehäuseteil 5 eines Gehäuses, vorzugsweise eines Gehäuses für einen Akkumulator, insbesondere einer Batteriezelle für eine Lithium-Ionen-Batterie, gemäß beispielsweise Fig. 10a - 12c, gezeigt.

Obwohl nachfolgend Ausführungsbeispiele für stiftförmige Leiter ohne Kopfteil beschrieben sind, können diese ohne dass dies ausdrücklich erwähnt ist, sich diese auch auf stiftförmige Leiter mit Kopfteil beziehen.

Das Gehäuseteil 5 umfasst eine Öffnung 7, die in das Gehäuseteil eingelassen ist. In die Öffnung 7 ist die erfindungsgemäße Durchführung, umfassend den Grundkörper, insbesondere den im Wesentlichen ringförmigen Grundkörper 9, der den Leiter, insbesondere den im Wesentlichen stiftförmigen Leiter 11 aufnimmt, eingebracht. In im Wesentlichen ringförmigen Grundkörper 9 ist der im Wesentlichen stiftförmige Leiter eingeglast. Um eine hermetische Durchführung des im Wesentlichen stiftförmigen Leiters 11 durch den Grundkörper und damit die Öffnung 7 bereitzustellen, ist der im Wesentlichen stiftförmige Leiter 11 in einen Glaspfropfen aus einem Glas- oder Glaskeramikmaterial eingeschmolzen, d.h. der Grundkörper 9 und der im Wesentlichen stiftförmige Leiter 11 sind mit dem Glas 13 verschmolzen. Werden Materialien mit unterschiedlichem Ausdehnungskoeffizient α verwandt, z. B. für den Grundkörper, den stiftförmigen Leiter und das Glasmaterial, so kann eine sogenannte Druckglasdurchführung zur Verfügung gestellt werden. Der Vorteil einer Druckglasdurchführung besteht darin, dass auch unter erhöhten Belastungen auf den Glaspfropfen, z. B. bei Druckbelastung ein Herausdrücken des Glaspfropfens mit dem Metallstift aus dem Grundkörper vermieden wird. Bevorzugt ist vorgesehen, dass die Verschmelztemperatur des Glas- oder Glaskeramikmaterials 20 K bis 100 K unterhalb der Schmelztemperatur des Materials des Grundkörpers 9 und/oder des stiftförmigen Leiters liegt. Ist der Grundkörper 9 aus einem niedrig schmelzenden Metall, insbesondere einem Leichtmetall, bevorzugt Aluminium, einer Aluminiumlegierung, Magnesium, einer Magnesiumlegierung oder AlSiC, Titan, einer Titanlegierung, aber auch Stahl, rostfreier Stahl oder Edelstahl, so wird bevorzugt ein Glasmaterial, durch das der Leiter hindurchgeführt wird, eingesetzt, das die nachfolgenden Komponenten in mol.-% umfasst:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

In einer besonders bevorzugten Ausführungsform umfasst die Glaszusammensetzung nachfolgende Komponenten in mol.-%:

| | |
|---|---|
| P₂O₅ | 38-50 mol.-%, insbesondere 39-48 mol.-% |
| Al₂O₃ | 3-14 mol.-%, insbesondere 4-12 mol.-% |
| B₂O₃ | 4-10 mol.-%, insbesondere 4-8 mol.-% |
| Na₂O | 10-30 mol.-%, insbesondere 14-20 mol.-% |
| K₂O | 10-20 mol.-%, insbesondere 12-19 mol.-% |
| PbO | 0-10 mol.-%, insbesondere 0-9 mol.-%. |

Nachfolgend werden acht Ausführungsbeispiele in Tabelle 1 für die zuvor genannten Glaszusammensetzungen angegeben.

**Tabelle 1:**

| Ausführungsbeispiele: | | | | | | | | |
|---|---|---|---|---|---|---|---|---|
| | | | | | | | | |
| | AB1 | AB2 | AB3 | AB4 | AB5 | AB6 | AB7 | AB8 |
| Mol-% | | | | | | | | |
| P₂O₅ | 47.6 | 43.3 | 43.3 | 43.3 | 37.1 | 40.0 | 42,0 | 46,5 |
| B₂O₃ | 7.6 | 4.8 | 4.7 | 4.8 | 4.9 | 6.0 | 6,0 | 7,6 |
| Al₂O₃ | 4.2 | 8.6 | 8.7 | 2.0 | 2 | 12.0 | 12,0 | 4,2 |
| Na₂O | 28.3 | 17.3 | | | | 15.0 | 16.0 | 28,3 |
| K₂O | 12.4 | 17.3 | 17.3 | | | 18.0 | 19.0 | 12,4 |
| PbO | | | | | | 9.0 | | |
| BaO | | 8.7 | 8.7 | 15.4 | 14 | | | |
| Li₂O | | | 17,3 | 34,6 | 42,1 | | | |
| Bi₂O₃ | | | | | | | 5 | 1 |
| Halbkugel Temperatur(°C) | 513 | 554 | 564 | 540 | 625 | | 553 | 502 |
| α(20-300° C) (10⁻⁶/K) | 19 | 16,5 | 14,9 | 13,7 | 14,8 | 16.7 | 16,0 | 19,8 |
| Tg (°C) | 325 | 375 | 354 | 369 | 359 | 392 | 425 | 347 |
| Dichte [g/cm³] | 2,56 | | | | | 3 | 3,02 | 2,63 |
| Auslaugung In Ma-% | 18,7 | 14,11 | 7,66 | 12,63 | 1,47 | 3,7 | 29,01 | 8,43 |
| Gewichtsverlust(%) nach 70h in 70°C-Wasser | 10,7 | 0,37 | 0,1 | 0,13 | 0,13 | n.B. | 0,006/0,001 | 0.45/0,66 |

Die oben angegebene spezielle Glaszusammensetzung zeichnet sich dadurch aus, dass die Glasmaterialien sehr hohe thermische Dehnungen aufweisen, die im Bereich > 15 x 10⁻⁶ K⁻¹, bevorzugt im Bereich 15 x 10⁻⁶ K⁻¹ bis 25 x 10⁻⁶ K⁻¹ für Temperaturen zwischen 20° C und 300° C liegen und damit in dem Bereich der thermischen Ausdehnung von Leichtmetallen wie Aluminium, aber auch von ähnlichen Metallen für die im Wesentlichen stiftförmigen Leiter 11, die durch das Glasmaterial durchgeführt, nämlich beispielsweise Kupfer. So besitzt Aluminium bei Zimmertemperatur eine thermische Ausdehnung α = 23 x 10⁻⁶/K, Kupfer von 16,5 x 10⁻⁶/K. Um zu verhindern, dass beim Einglasen das Leichtmetall des Grundkörpers und eventuell auch des Metallstifts schmilzt oder deformiert, liegt die Schmelztemperatur des Glasmaterials unterhalb der Schmelztemperatur des Materials des Grundkörpers und/oder Leiters. Die Verschmelztemperatur der angegebenen Glaszusammensetzung liegt dann im Bereich 250° C bis 650° C. Das Einglasen des im Wesentlichen stiftförmigen Leiters 11 in den Grundkörper 9 vor Einsetzen der Durchführung in die Öffnung 7 wird dadurch erreicht, dass das Glas zusammen mit dem Leiter, insbesondere dem stiftförmigen Leiter, auf die Verschmelztemperatur des Glases erwärmt wird, so dass das Glasmaterial erweicht und in der Öffnung den Leiter, insbesondere den stiftförmigen Leiter, umschließt und am Grundkörper 9 anliegt. Wird, wie oben beschrieben, beispielsweise Aluminium als Leichtmetall mit einem Schmelzpunkt T_{schmelz} = 660,32° C für den Grundkörper 9 verwandt, so liegt die Verschmelztemperatur des Glasmaterials, wie oben angegeben, bevorzugt im Bereich 350° C bis 640° C. Bevorzugt ist das Material des stiftförmigen Leiters 11 identisch zum Material des Grundkörpers, was den Vorteil hat, dass der Ausdehnungskoeffizient für den Grundkörper und für den Metallstift identisch ist. Der stiftförmige Leiter kann als Material Aluminium, eine Aluminiumlegierung, AlSiC, Kupfer,eine Kupferlegierung, CuSiC- oder NiFe-Legierungen, eine Kupferseele, d. h. ein NiFe-Mantel mit Kupferinnenteil oder CF25, d. h. eine Kobalt-Eisenlegierung, Silber, eine Silberlegierung, Gold oder eine Goldlegierung umfassen. Ist der Ausdehnungskoeffizient α im Bereich 20° C bis 300° Cdes Glas- oder Glaskeramikmaterials nicht vollständig an das Material des Grundkörpers angepasst, so wird eine Druckglasdurchführung bereitgestellt. Im anderen Fall handelt es sich um eine sogenannte angepasste Durchführung.

Als Materialien für den Grundkörper wird bevorzugt ein Leichtmetall wie Aluminium (Al), AlSiC, eine Aluminiumlegierung, Magnesium, eine Magensiumlegierung, Titan, eine Titanlegierung verwandt. Alternative Materialien für den Grundkörper sind Metalle wie Stahl, rostfreier Stahl, Edelstahl oder Werkzeugstahl.

Unter Verschmelztemperatur bzw. Verschmelzungstemperatur des Glases oder der Glaskeramik wird diejenige Temperatur des Glases oder der Glaskeramik verstanden, bei der das Glasmaterial erweicht und so an dem mit dem Glasmaterial zu verschmelzenden Metall dicht anliegt, so dass eine Fügeverbindung zwischen dem Glas oder der Glaskeramik und dem Metall erhalten wird.

Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, deren Offenbarungsgehalt vollumfänglich in vorliegende Anmeldung mit aufgenommen wird, bestimmt werden. Die Messung der Halbkugeltemperatur ist ausführlich in der DE 10 2009 011 182 A1, deren Offenbarungsgehalt vollumfänglich in vorliegende Anmeldung mit aufgenommen wird, erläutert.

Die aus der DE 10 2009 011 182 A1 bekannt gewordenen Glaslote betreffen Hochtemperaturanwendungen, z. B. bei Brennstoffzellen.

Die zuvor angegebenen Phosphatglaszusammensetzungen weisen einen Li-Anteil von bis zu 45 mol-%, insbesondere bis zu 35 mol-%, auf. Überraschenderweise sind diese Glaszusammensetzungen kristallisationsstabil, d.h. in einem nachgeschalteten Sinterschritt zeigen sie keine störende Kristallisation, insbesondere für weniger als 35 mol-% keine wesentliche Kristallisation.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bzw. natriumfreie Gläser besonders beständig gegenüber Elektrolyten, insbesondere solchen, wie sie in Li-Ionen-Speichereinrichtungen verwandt werden, sind.

Die zuvor angegebenen Glaszusammensetzungen weisen eine thermische Ausdehnung a(20° C - 300° C) > 14 · 10⁻⁶/K, insbesondere zwischen 15 · 10⁻⁶/K und 25 · 10⁻⁶/K auf. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für AI-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Des Weiteren ist, wie in den Fig. 1a und 1b dargestellt, ein Gehäuseteil 5 des Gehäuses, der Batterie beziehungsweise Batteriezelle, hier der Batteriedeckel, der die Öffnungen für die Durchführung der Elektroden aufweist, dargestellt. Der Batteriedeckel bzw. das Gehäuseteil ist ebenfalls bevorzugt aus Aluminium hergestellt. Als Material für den Batteriedeckel bzw. das Gehäuseteil kommen aber auch in Frage: Aluminiumlegierungen, Magnesium sowie Magnesiumlegierungen, AlSiC, Titan, Titanlegierungen, aber auch Stahl, rostfreier Stahl oder Edelstahl. Das Gehäuseteil weist eine Außenseite 20.1 und eine Innenseite 20.2 auf. Die Außenseite ist dadurch gekennzeichnet, dass sich von der Batteriezelle nach außen erstreckt, die Innenseite dadurch, dass sie sich zum Elektrolyten der Batteriezelle, beispielsweise bei einem Lithium-Ionen-Akkumulator hin erstreckt. Das gesamte Gehäuse mit Batteriezelle und Durchführungen ist in den Figuren 10a-12c dargestellt.

Bei Lithium-Ionen-Batterien wird als Elektrolyt typischerweise ein nicht wässriger Elektrolyt, bestehend typischerweise aus einem Karbonat, insbesondere aus einer Karbonatmischung, beispielsweise einer Mischung aus Ethylenkarbonat und Dimethylkarbonat, verwandt, wobei die aggressiven, nicht wässrigen Batterieelektrolyten ein Leitsalz aufweisen, beispielsweise das Leitsalz LiPF₆ z. B. in Form einer 1-molaren Lösung.

Gemäß dem ersten Ausführungsbeispiel weist der Grundkörper 3 einen Überstand 30 auf, d.h. die Wandstärke W₁ des ringförmigen Körpers im Beispiel gemäß Fig. 1a auf der Außenseite des Gehäuseteils ist größer als die Dicke W₁ des ringförmigen Grundkörpers 9 im Bereich der Innenseite des Gehäuseteils, wodurch sich eine Anlage 32 des Grundkörpers auf der Außenseite des ringförmigen Körpers ergibt. Der ringförmige Körper 9 kann mit dem Gehäuseteil 5 im Bereich der Auflage 32 durch Laserstrahlschweißen, Elektronenstrahlschweißen, Löten, Einschrumpfen in die Öffnung 7 sowie Einpressen in die Öffnung 7 und Bördeln verbunden.

In Fig. 1b ist ein analoges Ausführungsbeispiel einer Durchführung zu Fig. 1a gezeigt, wobei gleiche Bezugsziffern für gleiche Bauteile verwandt werden.

Allerdings ist nunmehr die Breite W₁ im Bereich der Innenseite 20.2 größer als die Breite W₂ Bereich der Außenseite 20.1.

Ansonsten ist die Ausgestaltung gemäß Fig. 1b identisch zu Fig. 1a. Die Verbindung kann, wie bei Fig. 1a, zwischen Gehäuseteil 5, hier Batteriedeckel und Grundkörper 30 erfolgen, beispielsweise wie oben beschrieben, durch Laserstrahlschweißen, Elektronenstrahlenschweißen, Löten, Einschrumpfen oder Einpressen in die Öffnung 7.

Während es sich bei dem Grundkörper gemäß den Fig. 1a und 1b im Wesentlichen um einen Flanschring handelt, ist bei der Ausgestaltung gemäß der Fig. 2a bis 2b der ringförmige Grundkörper 109 ein ringförmiger Grundkörper mit einem Schweißring 170. Gleiche Bauteile wie in Fig. 1a und 1b sind mit um 100 erhöhten Bezugsziffern bezeichnet. Im Wesentlichen ist die Ausgestaltung gemäß den Fig. 2a bis 2b identisch zu den Ausgestaltungen gemäß Fig. 1a bis 1b. Der ringförmige Grundkörper 109 mit einem Schweißring 170 ermöglicht ein Verbinden Grundkörpers 109 mit dem Gehäuseteil durch alternative Verbindungsverfahren. Die Verbindung des ringförmigen Grundkörpers mit dem Gehäuseteil im Bereich des Schweißrings 170 kann durch Widerstandsschweißen oder Widerstandslöten erfolgen

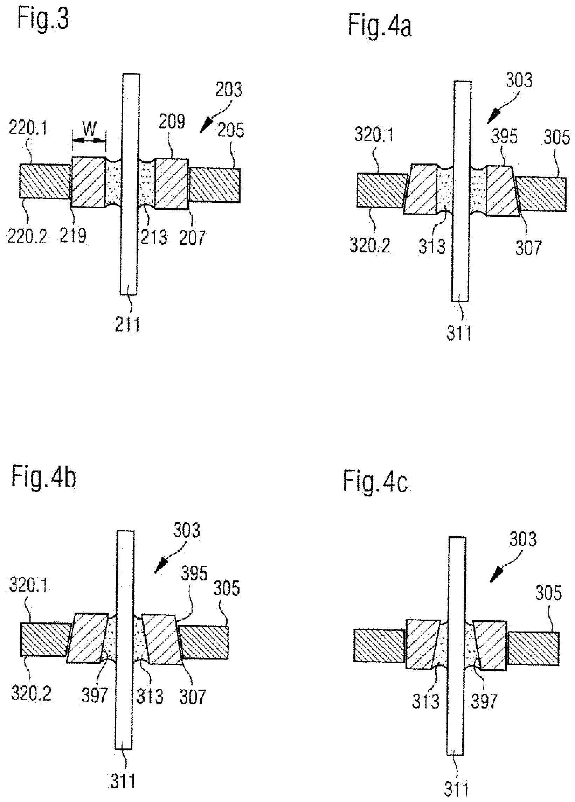

Fig. 3 zeigt eine weitere Ausgestaltung der Erfindung. Gleiche Bauteile wie in den Fig. 1a bis 1b und 2a bis 2b sind mit jeweils um 200 gegenüber Fig. 1a und 1b bzw. 100 gemäß Fig. 2a bis 2b erhöhten Bezugsziffern gekennzeichnet.

Im Gegensatz zu den Ausgestaltungen gemäß den Figuren 1a bis 1b und 2a bis 2b weist der Grundkörper keine unterschiedlichen Weiten W1 und W2 auf, so dass ein Anschlag 32 ausgebildet wird, sondern die Weite W des ringförmigen Grundkörpers ist über die gesamte Höhe gleich. Der ringförmige Grundkörper 209 mit gleicher Weite über die gesamte Höhe wird in die Öffnung 207 eingebracht. Eine Verbindung zwischen dem Gehäuseteil 205 und der Durchführung 203, umfassend den ringförmigen Grundkörper 209 sowie das Glasmaterial 213 und den im Wesentlichen stiftförmigen Leiter 211 wird durch Einsetzen in die Öffnung 207 und anschließendes Verbinden im Bereich der Seitenwände 219 der Öffnung 207 erreicht und nicht durch Verbinden. Die Erfindung kann durch Laserschweißen, Löten, Einschrumpfen, Einpressen oder Elektronenschweißen hergestellt werden.

Fig. 4a-4c zeigen alternative Ausgestaltungen einer Durchführung, die in eine Öffnung 307 im Gehäuseteil 305 eingebracht wird. Im Wesentlichen entspricht dies der Ausgestaltung gemäß Fig. 3, wobei für gleiche Bauteile eine um 100 erhöhte Bezugsziffern verwandt wurde. Im Unterschied zu Fig. 3 ist jedoch der Grundkörper 309 als konischer Ring ausgebildet, der in eine konisch verlaufende Öffnung 307 im Gehäuseteil eingelassen wird. Die Verbindung zwischen der Durchführung erfolgt wiederum zwischen den Seitenwänden der konischen Öffnung 307 und dem konischen Grundkörper 309, beispielsweise durch Schweißen, Löten, Einbördeln, Einschrumpfen. Es ist aber auch möglich, den im Wesentlichen konisch verlaufenden ringförmigen Grundkörper 309 in die konische Öffnung 307 im Gehäuseteil 305 einzupressen. Der konische Grundkörper kann die drei in Fig. 4a-4c dargestellten Ausgestaltungen aufweisen. In Fig. 4a ist der Grundkörper an der Außenseite 395 zum Gehäuseteil 305 konisch; in Fig. 4b sowohl an der Außenseite 395 wie an der zum stiftförmigen Leiter 311 eingerichteten Innenseite 397 und bei Fig. 4c nur an der Innenseite 397. Durch die konische Ausgestaltung sowohl der Öffnung als auch des Grundkörpers wird eine Relativbewegung der Durchführung in Richtung der Außenseite 320.1 des Gehäuseteils 305 vermieden, da die konische Bohrung und der konisch ausgestaltete Grundkörper quasi als Widerhaken fungieren und ei Relativbewegung in Richtung Außenseite 320.1 zu einem Formschluss zwischen Grundkörper 309 der Durchführung 303 und den Seitenwänden der Öffnung 307 führen.

Ein Vorteil der Ausgestaltung gemäß Fig. 4 besteht darin, dass auch unter erhöhten Belastungen die Durchführung zum Beispiel einer Druckbelastung, ein Herausdrücken der Durchführung 303 mit Metallstift 311 aus der Durchgangsöffnung 307 sicher vermieden wird. Besonders bevorzugt ist es, wenn die Öffnungen 307 durch eine einfache Herstellmethode, beispielsweise durch Stanzen, in das Gehäuseteil 305 eingebracht werden

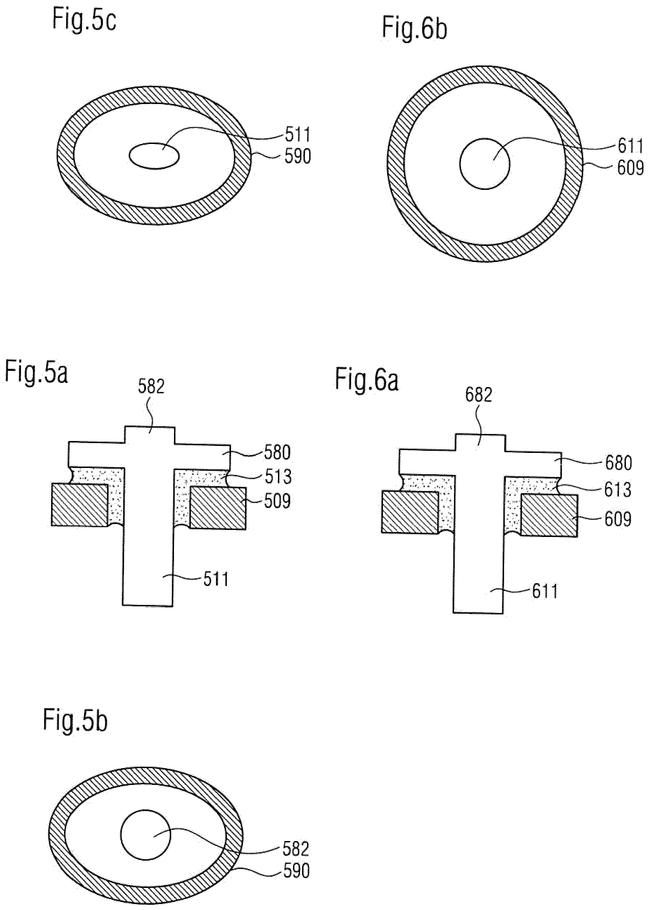

In den Figuren 5 bis 7 sind Ausgestaltungen der Erfindung gezeigt, bei der wiederum ein ringförmiger Grundkörper 509 vorgesehen ist. Allerdings ist der stiftförmige Leiter nunmehr mit einem Kopfteil 580 versehen. Die Einglasung bei der Ausgestaltung gemäß der Fig. 5a bis 5c sowie 6a bis 6b und Fig. 7 erfolgt nicht nur zwischen dem stiftförmigen Leiter 511, der durch den ringförmigen Grundkörper 509, der wiederum, wie z. B. in Fig. 3 dargestellt, in das Gehäuseteil eingesetzt werden kann, hindurchgeführt wird, sondern es wird nunmehr das Glasmaterial bzw. Glaskeramikmaterial 513 auch zwischen dem Grundkörper 509 und das Kopfteil 580 eingebracht.

Die Abmessungen A1 des Kopfteils 580 sind dabei größer als die Abmessungen A1 des im Wesentlichen stiftförmigen Leiters 511. Bei einem Leiter mit im Wesentlichen runden Querschnitt sind dann die Abmessungen des Kopfteils größer sind als der Durchmesser des stiftförmigen Leiters. Dies bedeutet, dass die Kopffläche des Kopfteiles größer ist, als die Kopffläche des stiftförmigen Leiters 511 mit dem das Kopfteil 580 verbunden ist. Des Weiteren kann der Kopfteil 580 derart ausgestaltet sein, dass er mit einem Elektroden-Verbindungsbauteil verbindbar ist. Bei dem Elektroden-Verbindungsbauteil handelt es sich insbesondere um ein Bauteil aus Kupfer für die Kathode oder Aluminium für die Anode. Die Verbindung von Kopfteil und Elektroden-Verbindungsbauteil (nicht gezeigt) erfolgt mit einer mechanisch stabilen, insbesondere nicht lösbaren elektrischen Verbindung. Eine solche mechanisch stabile, nicht lösbare elektrische Verbindung wird dadurch zur Verfügung gestellt, dass das Kopfteil und das Elektroden- Verbindungsteil durch Schweißen, insbesondere Widerstandsschweißen, Elektronenstrahlschweißen, Reibschweißen, Ultraschallschweißen, Bonden, Kleben, Löten, Verstemmen, Schrumpfen, Verpressen, Verklemmen und Quetschen bevorzugt stoffschlüssig verbunden wird. Die Verbindung von Kopfteil und Elektroden- Verbindungsbauteil erfolgt, nachdem das Kopfteil 580 und der stiftförmige Leiter 511 in das Gehäuse der Batterie beziehungsweise Batteriezelle eingesetzt oder eingeglast ist. Selbstverständlich wäre es auch möglich, das Durchführungsbauteil vor dem Einsetzen in die Gehäuseöffnung beziehungsweise Einglasen mit dem Elektroden-Verbindungsbauteil zu verbinden, allerdings ist die erstgenannte Möglichkeit die bevorzugte.

Durch eine Ausgestaltung mit einem Kopfteil 580 wird eine Durchführung zur Verfügung gestellt, die bei Verwendung in einem Gehäuse für Batteriezellen nur einen geringen Innenbauraum benötigt. Das Kopfteil des erfindungsgemäßen Durchführungsbauteiles weißt eine sehr große Auflagefläche zum Ausschluss des Elektroden-Verbindungsbauteiles auf. Hierdurch wird eine hohe Stabilität im Anschlussbereich erreicht. Insbesondere wird gegenüber einer Anbindung der Elektrodenverbindungsbauteile direkt an den stiftförmigen Leitern eine wesentlich höhere Biegesteifigkeit erreicht. Ein weiterer Vorteil bei einer Anbindung der Elektroden-Verbindungsbauteile über das Kopfteil ist darin zu sehen, dass gegenüber einer direkten Anbindung an den Stift Verengungen beziehungsweise starke Veränderungen der Querschnittsfläche in der Leiterbahn von der Batteriezelle zur Durchführung durch das Gehäuse der Batteriezelle vermieden werden. Querschnittsverengungen führen insbesondere bei hohen Strömen von 20A bis zu 500A bei Lithium-Ionen-Akkumulatoren als Energieträger in Automobilen zu hoher Verlustwärme, die in den Batteriezellen zu Problemen führen können. Derartige Verlustwärmen können durch das Kopfteil 580 vermieden werden.

Über den Leiter, insbesondere den stiftförmigen Leiter 511, hinaus ragt ein Fortsatz 582, z. B. über die Innenseite 520.2 in das Innere der Batteriezelle hinein, wobei der Fortsatz 582 des Leiters der Zentrierung für das zuvor angesprochene Elektroden-Verbindungsbauteil dienen kann. Der Fortsatz 582 des stiftförmigen Leiters ist bevorzugt stets rund ausgebildet, unabhängig von der Form des Leiters, der z. B. oval oder rund sein kann. Auch können die Abmessung von Fortsatz und dem im Wesentlichen stiftförmigen Leiter unterschiedlich sein.

Auch der ringförmige Grundkörper 509 kann unterschiedliche Formen annehmen, beispielsweise, wie in den Fig. 5a bis 5c gezeigt, eine ovale Außenform 590, wobei dann bevorzugt auch der Leiter im Bereich, in dem dieser durch den ovalen Grundkörper hindurchgeführt wird, d.h. im Bereich 511 ebenfalls oval ausgebildet sein kann, das Kopfstück, wie in Fig. 5b dargestellt, in der Draufsicht jedoch rund zum Anschluss der Elektroden-Verbindungsbauteile.

Alternativ zu einer ovalen Ausführungsform des ringförmigen Grundkörpers, des stiftförmigen Leiters und des Fortsatzes was insbesondere bei schmalen Batteriedeckeln von Vorteil ist, ist es möglich, sowohl den stiftförmigen Leiter als auch den Zentrierungsfortsatz und den Grundkörper ringförmig auszubilden. Selbstverständlich können auch Formen gemischt werden, d. h. ovaler Grundkörper mit ringförmigem, stiftförmigem Leiter, ohne dass dies näher beschrieben wird.

Ein ringförmiger Grundkörper mit ringförmigem stiftförmigem Leiter ist in den Fig. 6a bis 6b angegeben. Gleiche Bauteile wie in den Fig. 5a bis 5c sind mit 100 erhöhten Bezugsziffern bezeichnet, d.h. in den Fig. 6a bis 6b bezeichnet, beispielsweise der stiftförmige Leiter die Bezugsziffer 611, das Kopfteil 680 und 609 den ringförmigen Grundkörper.

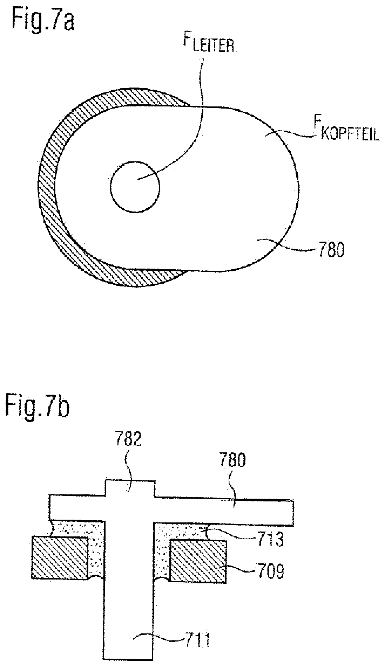

Um andere Verbindungsteile bzw. Verbindungsbauteil an den Elektroden anzubringen, ist in einer Ausführungsform gemäß Fig. 7 vorgesehen, die Kopffläche 780 des Kopfteils 2 auszukragen, d.h. über den Durchmesser der Öffnung hinaus vorzusehen. Gleiche Bauteile wie in den Fig. 5a bis 5c sind mit um 200 erhöhten Bezugsziffern angegeben, d.h. der stiftförmige Leiter trägt die Bezugsziffer 711 und der ringförmige Grundkörper die Bezugsziffer 709. Die Auskragung des Kopfteils 780 erlaubt zusätzlich zu den zuvor beschriebenen Verbindungsverfahren, die auf Grund der Zugänglichkeit von zwei Seiten auch mit Durchschweißen, Widerstandsschweißen oder Nieten zu verbinden.

In der Ausführungsform gemäß Fig. 7 ist gut zu erkennen insbesondere das erfindungsgemäße Merkmal des Durchführungsbauteiles, dass die Fläche des Kopfteiles 780 (F_{KOPFTEIL}) größer ist, als die Fläche des stiftförmigen Leiters 711 (F_{LEITER}). Da sich bei der Ausführung gemäß Fig. 7 die Abmessungen und Form des Fortsatzes des stiftförmigen Leiters 711 entsprechen, ist die in der Draufsicht dargestellte Querschnittsfläche des Fortsatzes gleich der Fläche des stiftförmigen Leiters.

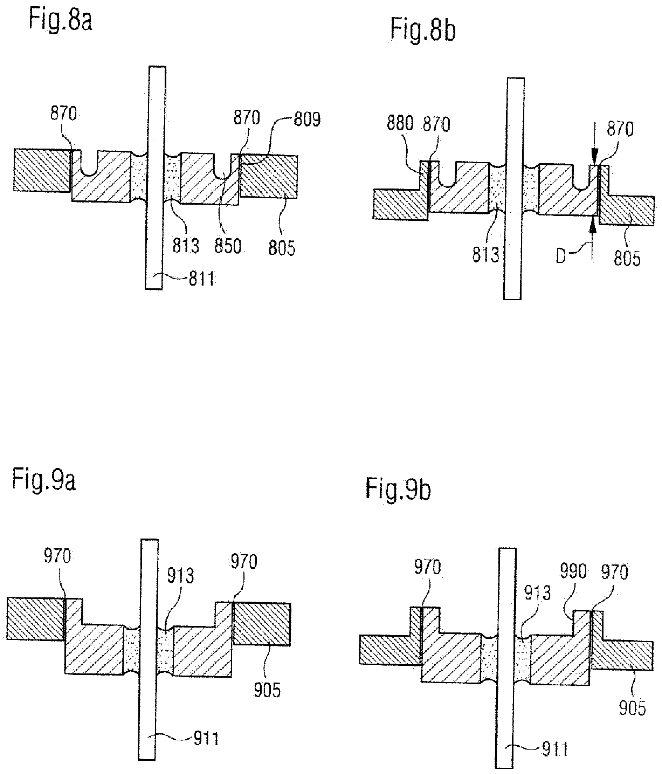

In den Fig. 8a-9b sind Ausführungsformen einer Durchführung eines stiftförmigen Leiters durch einen Grundkörper gezeigt, bei dem die Durchführung in das Gehäuseteil, insbesondere den Batteriedeckel mit einer thermischen Barriere und einer mechanischen Entlastung gezeigt ist.

In Fig. 8a und 8b ist eine erste Ausführungsform einer erfindungsgemäßen Durchführung mit einer Entlastungseinrichtung zur mechanischen Entlastung und als thermische Barriere gezeigt.

Im Gegensatz zu den Ausführungsformen gemäß Fig. 1a-4 umfasst bei der Ausführungsform gemäß Fig. 8a und 8b der Grundkörper 809 als Entlastungseinrichtung eine umlaufende Nut 850. Wiederum ist in dem Grundkörper 809 mit der umlaufenden Nut 850 ein im Wesentlichen stiftförmiger Leiter 811 mit einem Glas- oder Glaskeramikmaterial 813 eingeschmolzen.

Obwohl nicht gezeigt und ausdrücklich erwähnt, kann der stiftförmige Leiter auch mit einem Kopfteil in einer alternativen Ausführungsform ausgebildet sein, ohne dass ein Fachmann erfinderisch tätig werden muss.

Des Weiteren zu sehen ist in Fig. 8a auch ein Gehäuseteil 805, im Wesentlichen der Deckel der Batteriezelle. Die Durchführung, bestehend aus Grundkörper 809 mit eingeglastem, im Wesentlichen stiftförmigen Leiter, ist mit dem Gehäuseteil 805 umlaufend im Bereich 870, beispielsweise durch Schweißen, insbesondere Laserschweißen, verbunden. Die umlaufende Nut 850 stellt zum einen eine thermische Barriere dar, zum anderen stellt sie die erforderliche Elastizität zur Verfügung, um die Durchführung, insbesondere im Bereich der Einglasung 813, zu schützen beziehungsweise zu entlasten. Insbesondere wird mit Einbringen der umlaufenden Nut 850 erreicht, dass auftretende mechanische und thermische Belastungen, auf das Glas- bzw. Glaskeramikmaterial reduziert werden. Hierdurch können Rissbildungen im Glas- oder Glaskeramikmaterial der Durchführung, die zu Undichtigkeiten führen können, erheblich reduziert werden.

Die Ausgestaltung gemäß Fig. 8b zeigt wiederum eine Durchführung mit einer umlaufenden Nut 850 als Entlastungseinrichtung im Grundkörper. Im Gegensatz zur Ausgestaltung gemäß Fig. 8a weist hier das Gehäuseteil 805 im Bereich der Verbindung von Durchführung und Gehäuseteil 805 einen 880 auf. Dies führt gegenüber der Ausführungsform gemäß Fig. 8a zu einer noch besseren mechanischen Entlastung. Des Weiteren kann der Grundkörper über seine gesamte Dicke D mit dem Gehäuseteil 805 verbunden werden, was einen exakten Schweißprozess erlaubt.

Fig. 9a und 9b zeigen alternative Ausführungsformen zu den Fig. 8a und 8b, wobei auch bei den Fig. 9a und 9b eine Entlastung sowie eine thermische Barriere zur Verfügung gestellt wird. Im Gegensatz zu der Ausführung gemäß Fig. 8a weist der Grundkörper hier keine umlaufende Nut als Entlastungseinrichtung auf, sondern einen Überstand 990. Gleiche Bauteile wie in den Fig. 8a-8b sind mit um 100 gegenüber Fig. 8a und 8b erhöhten Bezugsziffern gekennzeichnet. Demgemäß ist der stiftförmige Leiter mit 911 bezeichnet und das Glas- und Glaskeramikmaterial mit 913. Der Bereich der Verbindung zwischen Durchführung und Gehäuseteil ist mit 970 bezeichnet. Die Vorteile zu Fig. 8a wie oben beschrieben, treffen auch auf Fig. 9a zu und werden hier mit eingeschlossen.

Fig. 9b zeigt eine alternative Ausführungsform zu Fig. 9a. Neben dem im Wesentlichen ringförmigen Grundkörper 909 weist nunmehr auch das Deckelteil 905 einen Überstand 980 auf. Die Vorteile zu Fig. 8b, wie oben beschrieben, treffen auch auf Fig. 9b zu und werden hier mit eingeschlossen.

Sämtliche Ausgestaltungen der Figuren 8a bis 9b, die eine mechanische und thermische Entlastung zur Verfügung stellen, sind anstelle der dargestellten Ausführungsform mit einem stiftförmigen Leiter 811, auch mit einem stiftförmigen Leiter mit Kopfteil, wie ausführlich in den Figuren 5 bis 7 beschrieben, möglich. Der Offenbarungsgehalt der Beschreibung zu Figur 5 bis 7 wird vollumfänglich hierin mit eingeschlossen, ohne dass es einer besonderen Erwähnung und Zeichnungen hierzu bedarf.

In den Figuren 10a-11b sind komplette Batteriezellen für eine Lithium-Ionen-Batterie dargestellt, mit eingesetzten Durchführungen gemäß der Erfindung.

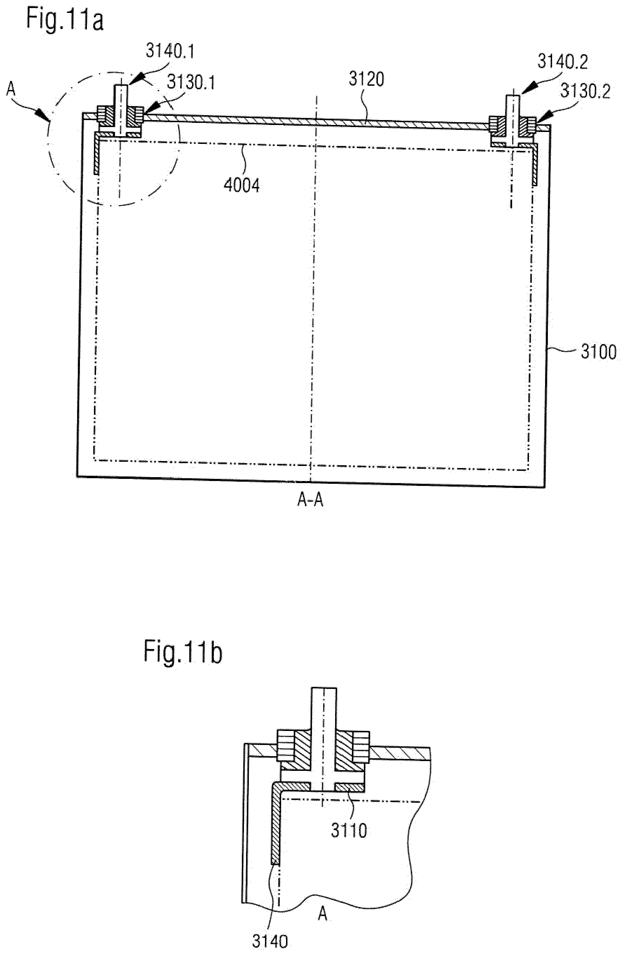

Hierbei zeigen die Figuren 10a-10b eine Ausgestaltung der Erfindung, bei der der stiftförmige Leiter nicht mit einem Kopfteil, d. h. eine Durchführung gemäß den Figuren 1a bis 4 bzw. 9a bis 10b, versehen ist. Im Gegensatz hierzu zeigen die Figuren 11a bis 11b eine Batteriezelle mit einem Gehäuse und darin eingebauten Durchführungen, wobei der stiftförmige Leiter ein Kopfteil gemäß der Erfindung aufweist.

In Figur 10a ist der prinzipielle Aufbau einer Batteriezelle 1000 dargestellt.

Die Batteriezelle 1000 weist ein Gehäuse 1100 mit Seitenwänden 1110 und einem Deckelteil 1120 auf. In das Deckelteil 1120 des Gehäuses 1100 sind Öffnungen 1130.1, 1130.2 eingelassen beispielsweise durch Stanzen. In die beiden Öffnungen 1130.1, 1130.2 sind wiederum Durchführungen 1140, 1140.2 eingesetzt.

Detailliert zeigt Figur 10b den Ausschnitt des Batteriedeckels 1120 mit der Öffnung 1130.1, und darin eingesetzter Durchführung 1140.1.

Die Durchführung 1140.1 umfasst einen stiftförmigen Leiter 2003 sowie einen Grundkörper 2200. Der stiftförmige Leiter 2003 ohne ein Kopfteil ist in den Grundkörper 2200 mit einem Glas- oder Glaskeramikmaterial 2280 eingeglast. Der stiftförmige Leiter 2003 wird nach Einglasen in den Grundkörper 2200 mit Glas- oder Glaskeramikmaterial 2280 als gesamtes Bauteil in die Öffnung 1130.1 eingesetzt, beispielsweise indem der Grundkörper 2200 der Durchführung, der bevorzugt aus Aluminium besteht, mit dem aus Aluminium bestehenden kaltverfestigten Deckelteil 1120, z. B. durch Schweißen verbunden wird. Aufgrund der Einglasung ist bevorzugt nur der Grundkörper 2200 erweicht.

Am stiftförmigen Leiter ist eine Ausnehmung 2002 vorgesehen, in die ein Elektrodenverbindungsteil 2020 eingesetzt ist. Das Elektrodenverbindungsteil wiederum dient entweder als Kathode oder als Anode der elektrochemischen Zelle 2004 der Batteriezelle 1000. Das Gehäuse 1100, das die Batteriezelle 1000 umgibt als Batteriezellengehäuse.

Wie aus Fig. 10a hervorgeht, ist aufgrund der Bauweise der Durchführung 1140.1, 1140.2 mit einem stiftförmigen Leiter und einem in einer Ausnehmung 2002 des stiftförmigen Leiters eingesetztes Elektrodenverbindungsbauteil, das mit der elektrochemischen Zelle 2004 verbunden wird, ein großer Bauraum 2006, der zwischen der elektrochemische Zelle 2004 und dem Deckel 1120 gebildet wird, verbunden.

Durch die erfindungsgemäße Bauweise der Durchführung 3200 mit stiftförmigem Leiter und Kopfteil wie in den Fig. 11a und 11b gezeigt, gelingt es den nicht ausgenutzten Bauraumes in dem Batteriezellengehäuse zu minimieren. Dies ist deutlich in den Fig. 11a-11b zu entnehmen.

Gleiche Bauteile wie in Fig. 10a und 10b mit um 2000 erhöhten Bezugsziffern gekennzeichnet.

Wiederum sind in die Öffnung 3130.1, 3130.2 des Deckels 3120 des Batteriezellengehäuses 3100 Durchführungen 3140.1, 3140.2 eingesetzt. Im Gegensatz zum Durchführungsbauteil der Durchführungen gemäß Fig. 10a und 10b ist nunmehr das Durchführungsbauteil mit einem stiftförmigen Leiter 3003 sowie einem Kopfteil 3005 versehen. Das Kopfteil weist einen Fortsatz 3030 auf sowie ein auf dem Kopfteil 3005 durch eine Schweiß-, Löt-, oder sonstiges der zuvor beschriebenen Verfahren fest angebrachtes Elektrodenverbindungsbauteil 3010. Das Elektrodenverbindungsbauteil weist einen Abschnitt 3140 auf, wobei der Abschnitt 3140 als Kathode beziehungsweise Anode für die elektrochemische Zelle 4004 dient. Wie aus den Fig. 11a bis 11b hervorgeht, ist deutlich der Vorteil des erfindungsgemäßen Durchführungsbauteils zu erkennen. Die in Fig. 11a bis 11b gezeigte Bauart der Durchführung bedingt, dass möglichst wenig Bauraum innerhalb des Batteriezellengehäuses, ungenutzt bleibt.

Im Wesentlichen stimmt die Ausgestaltung der Durchführungen mit Fig. 11a und 11b mit der Ausgestaltung der Durchführung in Fig. 6a bis 6b überein. Die Beschreibung zu Fig. 6a bis 6b wird vollumfänglich auf die vorliegende Beschreibung der Batteriezelle übertragen.

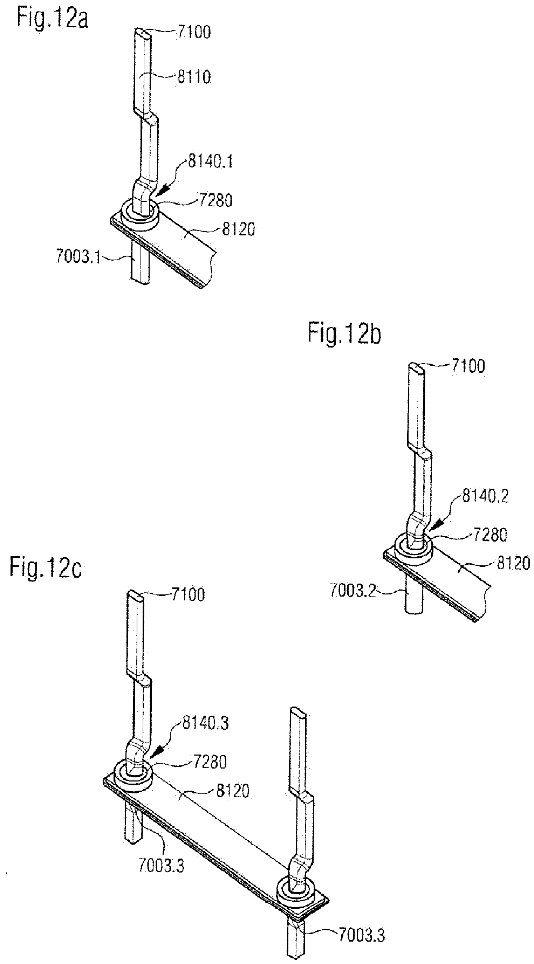

In den Fig. 12a bis 12c ist eine weitere Ausgestaltung eines erfindungsgemäßen Batteriegehäuses mit Durchführung gezeigt. Gleiche Bauteile wie in den vorangegangenen Figuren werden mit um 5000 erhöhten Bezugsziffern gekennzeichnet. Die in den Figuren 12a bis 12c gezeigten Ausführungsbeispiele zeichnen sich dadurch aus, dass die Leiter, im Wesentlichen die stiftförmigen Leiter 7003.1, 7003.2, 7003.3 zur Batteriezelle hin gerichteten Ende keine runde Form, d.h. keinen runden Querschnitt wie z. B. in den Figuren 10a - 11b aufweisen, sondern einen im Wesentlichen rechteckigen Querschnitt 7100 aufweisen. Des Weiteren weist der Leiter 7003.1, 7003.2, 7003.3 zwei Abknickungen auf. Im Prinzip bildet der Leiter 7003.1, 7003.2, 7003.3 bei seinem zur Batteriezelle hin gerichteten Ende bereits den Abschnitt 8110 auf, der als Kathode bzw. Anode für die elektrochemische Zelle (nicht gezeigt) dient. Im Gegensatz zur Ausführungsform gemäß Figur 11a und 11b, bei der an den Leiter, insbesondere den im Wesentlichen stiftförmigen Leiter, ein separates Elektrodenverbindungsbauteil (mit 3110 in Fig. 11b bezeichnet) angebracht ist, beispielsweise durch Schweißen, ist das Elektrodenverbindungsbauteil und der im Wesentlichen stiftförmige Leiter in den Ausführungsbeispielen gemäß der Figuren 12a bis 12c einteilig ausgebildet. Dies ist unter Fertigungsgesichtspunkten vorteilhaft, da keine zwei Teile verbunden werden müssen. Die Ausführungsformen 7003.1, 7003.2, 7003.3 unterscheiden sich im Wesentlichen durch die Querschnittsform des Leiters im Bereich der Durchführung 8140.1, 8140.2, 8140.3. Bei der Ausgestaltung gemäß Fig. 12a ist der Querschnitt des Leiters im Bereich der Einglasung 7280 ebenfalls im Wesentlichen rechteckig.

Bei der Ausgestaltung gemäß Fig. 12b ist anstelle des rechteckigen Querschnittes im Bereich der Einglasung 7280 der Querschnitt rund. Dieser Leiter ist mit der Bezugsziffer 7003.2 gekennzeichnet. Der Leiter weist bei der Ausführungsform gemäß Figur 12b auch bei der zur Außenseite der Batteriezelle hin einen runden Querschnitt auf im Gegensatz zur Ausführungsform gemäß Fig. 12a.

Bei der Ausgestaltung gemäß Fig. 12c ist im Bereich der Einglasung 7280 der Querschnitt ebenfalls rund wie in Fig. 12b, jedoch ist der Leiter 7003.3 im Bereich des Anschlusses an der Außenseite des Batteriegehäuses gequetscht und daher im Querschnitt rechteckig, bevorzugt quadratisch. In sämtlichen Figuren 12a bis 12c sind der Deckel des Batteriegehäuses mit 8120, der Grundkörper, in den der Leiter 7003.1, 7003.2, 7003.3 eingeglast ist, mit 8130 bezeichnet.

Mit der vorliegenden Erfindung wird erstmals eine Durchführung für ein Gehäuse, insbesondere ein Batteriezellengehäuse , bevorzugt für eine Lithium-Ionen-Batterie, angegeben, die vorfertigbar ist und besonders dafür geeignet ist, in Gehäuseteile von Batteriezellengehäusen eingesetzt zu werden. Das Batteriezellengehäuse umfasst bevorzugt ein Leichtmetall wie Aluminium (Al), eine Aluminiumlegierung, AlSiC, Magnesium, eine Magnesiumlegierung, Titan oder eine Titanlegierung. Es sind aber als Materialien für das Batteriezellengehäuse auch Metalle wie Stahl oder Edelstahl, insbesondere nicht rostender Stahl oder Werkzeugstahl möglich. In einem solchen Fall werden die Materialien des Grundkörpers und/oder des im Wesentlichen stiftförmigen Leiters angepasst.

Die erfindungsgemäße Lösung ermöglicht es des Weiteren, auf ein kostengünstiges Herstellungsverfahren und Ausgangsmaterialien zurückzugreifen. Ferner kann die gesamte Durchführung als vorgefertigtes Bauteil ausgebildet sein, in welches der Metallstift mittels eines Fixiermaterials, d.h. beispielsweise eines Glaspfropfens, in einen Grundkörper eingeschmolzen wird, bevor dieser in das Gehäuseteil eingesetzt wird. Hierdurch wird sichergestellt, dass es zu keinem Verlust der Kaltverfestigung des Gehäusebauteiles kommt. Des Weiteren können Materialstärken und Materialien von Gehäusebauteil und Grundkörper unabhängig gewählt werden. Durch spezielle Ausgestaltungen mit einer Entlastungseinrichtung kann die Durchführung sowohl mechanisch wie thermisch entlastet werden.

Die Erfindung umfasst Aspekte, die in nachfolgenden Sätzen offenbart sind, die Teil der Beschreibung sind, aber keine Ansprüche in Übereinstimmung mit J15/88.

### Sätze

1. Durchführung (3), insbesondere durch ein Gehäuseteil (5) eines Gehäuses, insbesondere eines Batteriegehäuses, bevorzugt aus einem Metall, insbesondere einem Leichtmetall, bevorzugt Aluminium, einer Aluminiumlegierung, AlSiC, Magnesium, einer Magnesiumlegierung, Titan, einer Titanlegierung, Stahl, rostfreier Stahl oder Edelstahl, wobei der Gehäuseteil (5) wenigstens eine Öffnung (7) aufweist, durch die wenigstens ein Leiter, insbesondere ein im Wesentlichen stiftförmiger Leiter (11) in einem Glas- oder Glaskeramikmaterial hindurchgeführt wird,
dadurch gekennzeichnet, dass
die Durchführung (3) wenigstens einen Leiter, insbesondere einen im Wesentlichen stiftförmigen Leiter (11) sowie einen Grundkörper (9), insbesondere im Wesentlichen einen ringförmigen Grundkörper (9) umfasst.
2. Durchführung nach Satz 1,
dadurch gekennzeichnet, dass
der im Wesentlichen stiftförmige Leiter (11) als Material insbesondere ein Metall, bevorzugt Kupfer, CuSiC, eine Kupferlegierung, Aluminium, AlSiC, oder eine Aluminiumlegierung, Magnesium oder eine Magnesiumlegierung, NiFe, einen NiFe-Mantel mit Kupferinnenteil, Silber, eine Silberlegierung, Gold, eine Goldlegierung sowie eine Kobalt-Eisen-Legierung und der Grundkörper (9) als Material, insbesondere ein Metall, bevorzugt Aluminium, AlSiC, eine Aluminiumlegierung, Stahl, rostfreier Stahl, Edelstahl, Werkzeugstahl, Magnesium oder eine Magnesiumlegierung, Titan oder eine Titanlegierung umfasst.
3. Durchführung nach einem der Sätze 1 bis 2,
dadurch gekennzeichnet, dass
der Grundkörper (109) eine Entlastungseinrichtung, insbesondere eine Nut (850) und/oder ein Überstand (990) aufweist.
4. Durchführung nach einem der Sätze 1 bis 3,
dadurch gekennzeichnet, dass
zwischen dem Grundkörper (9) und dem Leiter, insbesondere dem stiftförmigen Leiter (11) ein Glas- oder Glaskeramikmaterial eingebracht ist, wobei das Glas- oder Glaskeramikmaterial bevorzugt eine Verschmelztemperatur aufweist, die geringer als die Schmelztemperatur des Grundkörpers (9) und/oder des Leiters, insbesondere des Stiftes (11) ist.
5. Durchführung nach einem der Sätze 1 bis 4, das Glas- oder Glaskeramikmaterial nachfolgende Komponenten in mol-% umfasst:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-20 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

6. Durchführung nach einem der Sätze 1 bis 5,
dadurch gekennzeichnet, dass
die Zusammensetzung die nachfolgenden Komponenten in mol.-% umfasst:

| | |
|---|---|
| P₂O₅ | 38-50 mol.-%, insbesondere 39-48 mol.-% |
| Al₂O₃ | 3-14 mol.-%, insbesondere 4-12 mol.-% |
| B₂O₃ | 4-10 mol.-%, insbesondere 4-8 mol.-% |
| Na₂O | 10-30 mol.-%, insbesondere 14-20 mol.-% |
| K₂O | 10-20 mol.-%, insbesondere 12-19 mol.-% |
| PbO | 0-10 mol.-%, insbesondere 0-9 mol.-%. |

7. Durchführung nach einem der Sätze 1 bis 6,
dadurch gekennzeichnet, dass
das Gehäuseteil (5) eine Außen- (20.1) und eine Innenseite (20.2) aufweist und der Grundkörper (5) mit der Innen- und/oder der Außenseite des Gehäuseteils verbunden ist, insbesondere in Form einer Schweißverbindung oder einer Lötverbindung oder durch Einpressen.
8. Durchführung nach einem der Sätze 1 bis 7,
dadurch gekennzeichnet, dass
der stiftförmige Leiter (511) ein Kopfteil (580) umfasst, wobei das Kopfteil eine Kopffläche (F_{KOPFTEIL}) aufweist, die größer als die Fläche des stiftförmigen Leiters (F_{LEITER}) ist.
9. Durchführung nach Satz 8,
dadurch gekennzeichnet, dass
das Kopfteil (580) und/oder der stiftförmige Leiter eine runde oder eine ovale Außenform aufweist und/oder
das Glas- oder Glaskeramikmaterial (1013) zum einen zwischen stiftförmigem Leiter und Grundkörper eingebracht ist, zum anderen aber auch zwischen Kopfteil und Grundkörper.
10. Gehäuse, insbesondere für eine Batteriezelle (1000) umfassend wenigstens eine Durchführung nach einem der Sätze 1 bis 9.
11. Speichereinrichtung, insbesondere Batterie, bevorzugt Li-Ionen-Batterie, insbesondere Li-Ionen-Akkumulator, bevorzugt mit einem Batteriegehäuse, insbesondere nach Satz 10,
dadurch gekennzeichnet, dass
die Speichereinrichtung eine Durchführung nach einem der Sätze 1 bis 9 umfasst.
12. Verfahren zur Herstellung einer Durchführung, insbesondere nach einem der Sätze 1 bis 9 mit wenigstens einem Leiter, insbesondere einem im Wesentlichen stiftförmigen Leiter, umfassend folgende Schritte:
- es wird ein Leiter, insbesondere ein im Wesentlichen stiftförmiger Leiter und ein Grundkörper zur Verfügung gestellt
- der Leiter, insbesondere der im Wesentlichen stiftförmige Leiter wird in einem Glas- oder Glaskeramikmaterial in einem Grundkörper eingeglast ergebend die Durchführung für ein Gehäuseteil eines Gehäuses, insbesondere eines Batteriezellengehäuses.
13. Verfahren nach Satz 12,
dadurch gekennzeichnet, dass
das Glas- oder Glaskeramikmaterial nachfolgende Komponenten in mol-% umfasst:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-% |

14. Verfahren nach Satz 13,
dadurch gekennzeichnet, dass
das Glas- oder Glaskeramikmaterial nachfolgende Komponenten in mol-% umfasst:

| | |
|---|---|
| P₂O₅ | 38-50 mol.-%, insbesondere 39-48 mol.-% |
| Al₂O₃ | 3-14 mol.-%, insbesondere 4-12 mol.-% |
| B₂O₃ | 4-10 mol.-%, insbesondere 4-8 mol.-% |
| Na₂O | 10-30 mol.-%, insbesondere 14-20 mol.-% |
| K₂O | 10-20 mol.-%, insbesondere 12-19 mol.-% |
| PbO | 0-10 mol.-%, insbesondere 0-9 mol.-%. |

15. Verfahren zum Versehen einer Batteriezelle (1000) mit einer Durchführung, insbesondere nach einem der Sätze 1 bis 9, umfassend folgende Schritte:
- es wird eine Durchführung mit einem Grundkörper zur Verfügung gestellt, wobei
- ein Leiter, insbesondere ein im Wesentlichen stiftförmiger Leiter in einem Glas- oder Glaskeramikmaterial in den Grundkörper eingeglast wird, ergebend die Durchführung
- die Durchführung wird mit dem Gehäuse verbunden, insbesondere durch Schweißen, bevorzugt Laserstrahlschweißen, Elektronenstrahlschweißen, Ultraschallschweißen, Widerstandsschweißen sowie alternativ durch Löten, Einschrumpfen, Einpressen, Einbördeln.

## Patentansprüche

1. Gehäuseteil (5) eines Gehäuses, insbesondere eines Batteriegehäuses, aus einem Metall, wobei der Gehäuseteil (5) wenigstens eine Öffnung (7) aufweist, in die eine Durchführung eingebracht ist, wobei die Durchführung umfasst:
- ein Glas- oder Glaskeramikmaterial;
- wenigstens einen Leiter, insbesondere einen im Wesentlichen stiftförmigen Leiter (11), der in das Glas- oder Glaskeramikmaterial eingebracht ist und
- einen Grundkörper (9), durch den der Leiter in dem Glas- oder Glaskeramikmaterial hindurchgeführt wird,
**dadurch gekennzeichnet, dass**
der Grundkörper (9) in der Öffnung hermetisch dicht mit dem Gehäuseteil (5) durch Schweißen, Löten, Einpressen, Einbördeln oder Einschrumpfen verbunden ist, derart, dass eine Helium-Leckrate geringer als 1•10⁻⁸ mbar l/sec ist.

2. Gehäuseteil eines Gehäuses nach Anspruch 1,
**dadurch gekennzeichnet, dass**
der im Wesentlichen stiftförmige Leiter (11) als Material insbesondere ein Metall, insbesondere ein Leichtmetall, bevorzugt Kupfer, CuSiC, eine Kupferlegierung, Aluminium, AlSiC, oder eine Aluminiumlegierung, Magnesium oder eine Magnesiumlegierung, NiFe, einen NiFe-Mantel mit Kupferinnenteil, Silber, eine Silberlegierung, Gold, eine Goldlegierung sowie eine Kobalt-Eisen-Legierung umfasst
und/oder
das Gehäuseteil (5) als Material insbesondere ein Metall, bevorzugt ein Leichtmetall, insbesondere Aluminium, AlSiC, eine Aluminiumlegierung, Stahl, rostfreier Stahl, Edelstahl, Werkzeugstahl, Magnesium oder eine Magnesiumlegierung, Titan oder eine Titanlegierung umfasst und /oder
der Grundkörper (9) als Material ein Metall, insbesondere ein Leichtmetall, bevorzugt Aluminium, eine Aluminiumlegierung, AlSiC, Magnesium, eine Magnesiumlegierung, Titan oder eine Titanlegierung umfasst.

3. Gehäuseteil eines Gehäuses nach einem der Ansprüche 1 bis 2,
**dadurch gekennzeichnet, dass**
der Grundkörper (109) eine Entlastungseinrichtung, insbesondere eine Nut (850) und/oder ein Überstand (990) aufweist.

4. Gehäuseteil eines Gehäuses nach einem der Ansprüche 1 bis 3,
**dadurch gekennzeichnet, dass**
zwischen dem Grundkörper (9) und dem Leiter, insbesondere dem stiftförmigen Leiter (11) ein Glas- oder Glaskeramikmaterial eingebracht ist, wobei das Glas- oder Glaskeramikmaterial bevorzugt eine Verschmelztemperatur aufweist, die geringer als die Schmelztemperatur des Grundkörpers (9) und/oder des Leiters, insbesondere des Stiftes (11) ist.

5. Gehäuseteil eines Gehäuses nach einem der Ansprüche 1 bis 4, das Glas- oder Glaskeramikmaterial nachfolgende Komponenten in mol-% umfasst:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-20 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-% |

6. Gehäuseteil eines Gehäuses nach einem der Ansprüche 1 bis 5,
**dadurch gekennzeichnet, dass**
das Gehäuseteil (5) eine Außen- (20.1) und eine Innenseite (20.2) aufweist und der Grundkörper (5) mit der Innen- und/oder der Außenseite des Gehäuseteils verbunden ist, insbesondere in Form einer Schweißverbindung oder einer Lötverbindung oder durch Einpressen.

7. Gehäuseteil eines Gehäuses nach einem der Ansprüche 1 bis 6,
**dadurch gekennzeichnet, dass**
der stiftförmige Leiter (511) ein Kopfteil (580) umfasst, wobei das Kopfteil eine Kopffläche (F_{KOPFTEIL}) aufweist, die größer als die Fläche des stiftförmigen Leiters (F_{LEITER}) ist.

8. Gehäuseteil eines Gehäuses nach Anspruch 7,
**dadurch gekennzeichnet, dass**
das Kopfteil (580) und/oder der stiftförmige Leiter eine runde oder eine ovale Außenform aufweist und/oder
das Glas- oder Glaskeramikmaterial (1013) zum einen zwischen stiftförmigem Leiter und Grundkörper eingebracht ist, zum anderen aber auch zwischen Kopfteil und Grundkörper.

9. Gehäuseteil eines Gehäuses nach einem der Ansprüche 1 bis 8,
**dadurch gekennzeichnet, dass**
das Titan oder die Titanlegierung ein biokompatibles und/oder körperverträgliches Material ist.

10. Gehäuseteil eines Gehäuses nach einem der Ansprüche 1 bis 9,
**dadurch gekennzeichnet, dass**
die Materialstärke des Gehäuseteils 1,5 mm und weniger ist, bevorzugt zwischen 1 mm und 3 mm liegt
und/oder
die Dicke des Grundkörpers zwischen 2 mm und 6 mm.

11. Gehäuse, insbesondere für eine Batteriezelle (1000) umfassend wenigstens ein Gehäuseteil nach einem der Ansprüche 1 bis 10.

12. Speichereinrichtung, insbesondere Batterie, bevorzugt Li-Ionen-Batterie, insbesondere Li-Ionen-Akkumulator,
**dadurch gekennzeichnet, dass**
die Speichereinrichtung ein Gehäuseteil nach einem der Ansprüche 1 bis 10 oder ein Gehäuse nach Anspruch 11 umfasst.

13. Verfahren zur Herstellung eines Gehäuseteils eines Gehäuses, insbesondere nach einem der Ansprüche 1 bis 10 mit einer Durchführung umfassend folgende Schritte:
- es wird ein Leiter, insbesondere ein im Wesentlichen stiftförmiger Leiter und ein Grundkörper zur Verfügung gestellt;
- der Leiter, insbesondere der im Wesentlichen stiftförmige Leiter wird in einem Glas- oder Glaskeramikmaterial in den Grundkörper eingeglast ergebend die Durchführung für ein Gehäuseteil eines Gehäuses, insbesondere eines Batteriezellengehäuses;
- die Durchführung wird mit dem Gehäuseteil durch Schweißen, Löten, Einpressen, Einbördeln oder Einschrumpfen verbunden, derart, dass eine Helium-Leckrate geringer als 10⁻⁸ mbar l/sec ist.

14. Verfahren nach Anspruch 13,
**dadurch gekennzeichnet, dass**
das Glas- oder Glaskeramikmaterial nachfolgende Komponenten in mol-% umfasst:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-% |

15. Verwendung eines Gehäuseteils eines Gehäuses bevorzugt nach einem der Ansprüche 1 bis 10 in einem der nachfolgenden Bereiche:
- medizinische Anwendungen
- Prothetik
- Rennsport
- Luft- und Raumfahrtanwendungen
